Europäisches Patentamt

European Patent Office

Office européen des brevets

(19)

(11) Numéro de publication: **0 251 875 B1**

## (12) FASCICULE DE BREVET EUROPEEN

(45) Date de publication de fascicule du brevet: **01.07.92**

(51) Int. Cl.⁵: **H02M 7/162**, H02M 7/19

(21) Numéro de dépôt: **87401412.9**

(22) Date de dépôt: **22.06.87**

(54) **Convertisseur pour l'alimentation en courant continu d'une pluralité de charges électriques.**

(30) Priorité: **26.06.86 FR 8609266**

(43) Date de publication de la demande:
**07.01.88 Bulletin 88/01**

(45) Mention de la délivrance du brevet:
**01.07.92 Bulletin 92/27**

(84) Etats contractants désignés:
**BE DE ES FR GB IT LU NL**

(56) Documents cités:
**FR-A- 2 454 216**

(73) Titulaire: **JEUMONT-SCHNEIDER INDUSTRIE**
**70, avenue du Président Wilson**
**F-92058 Paris la Défense Cedex 59(FR)**

(72) Inventeur: **Boisdon, Claude**
**13, Résidence Bernard Palissy**
**F-77210 Avon(FR)**

(74) Mandataire: **Phélip, Bruno et al**
**c/o Cabinet Harlé & Phélip 21, rue de La**
**Rochefoucauld**
**F-75009 Paris(FR)**

Rank Xerox (UK) Business Services

## Description

La présente invention concerne un convertisseur pour l'alimentation en courant continu d'une pluralité de charges électriques commandées de façon distincte et ayant une borne de polarité commune, à partir du réseau électrique triphasé. Elle s'applique lorsque la plage de variation de la tension appliquée à ces charges en régulation rapide est commune et est une fraction de la tension maximale de fonctionnement.

La demande de brevet FR-2 454 216 est relative à un convertisseur pour l'alimentation d'une charge ou à un dispositif pour l'alimentation de plusieurs charges électriques, comprenant autant de convertisseurs que de charges, à partir du réseau électrique triphasé auquel est connecté l'enroulement primaire d'un transformateur. Cette charge ou ce groupe de charges est branché(e) entre deux bornes de polarité distincte. Ce document est plus particulièrement relatif à un montage à quatre convertisseurs, chacun d'eux étant relié avec un autre convertisseur aux deux mêmes secondaires du tranformateur, la structure du montage étant choisie de façon à améliorer la réaction sur le réseau, grâce à un déphasage approprié.

Les charges branchées sur le même secondaire ont la même tension et sont commandées de façon analogue. Ce dispositif ne peut donc pas permettre l'alimentation de plusieurs charges commandées de façon distincte et ayant une borne de polarité commune.

La demande de brevet EP-0 225 200, déposée au nom de la demanderesse, est relative à un dispositif d'alimentation en courant continu d'au moins deux charges électriques ayant une polarité commune, notamment pour l'alimentation d'un four à arc à plusieurs électrodes ou de générateurs de plasmas. Ce dispositif comprend un ensemble de redresseurs contrôlés par charge, disposés en ponts de Graetz, en parallèle sur une alimentation alternative commune, les demi-ponts situés du côté de la polarité commune ayant une tension commune de commande de déphasage, tandis que les demi-ponts situés de l'autre côté sont commandés chacun par une régulation individuelle.

Un tel dispositif est tout à fait avantageux. Toutefois, lorsque la tension appliquée à chaque charge est élevée, implique la mise en série de semi-conducteurs et doit pouvoir varier rapidement dans une plage limitée, cette solution ne donne pas une totale satisfaction.

Le convertisseur selon l'invention est defini par les caracteristiques de la revendication 1, en particulier le convertisseur comprend, relié à la borne de polarité commune desdites charges, un premier ensemble redresseur commun, de préférence non contrôlé, en série avec un second ensemble redresseur contrôlé, constitué par un demi-pont inférieur commun, relié audit premier ensemble redresseur et par une pluralité de demiponts supérieurs, chacun d'eux étant relié en série à la borne de polarité non commune d'une charge électrique, et un transformateur à trois enroulements dont l'enroulement primaire est relié au réseau électrique triphasé et dont les deux enroulements secondaires sont respectivement reliés, d'une part, au premier ensemble redresseur, et d'autre part, au second ensemble redresseur, les éléments semiconducteurs de chacun desdits ensembles redresseurs étant tous connectés dans le même sens.

De préférence, une bobine de stabilisation est connectée entre chacun des demi-ponts supérieurs du second ensemble redresseur et la borne de polarité non commune de la charge électrique à laquelle il est connecté.

Selon un aspect de la présente invention, le premier ensemble redresseur délivre en permanence une première tension redressée tandis que le second ensemble redresseur fonctionne en dévolteur ou en survolteur en fonction de la tension finale individuelle souhaitée entre les bornes de chaque charge.

De préférence, la tension délivrée par ledit premier ensemble redresseur est fonction de la plage de variation de la tension appliquée aux charges et, de préférence, de l'ordre de 40 à 50 % de la tension nominale totale à vide appliquée à chaque charge.

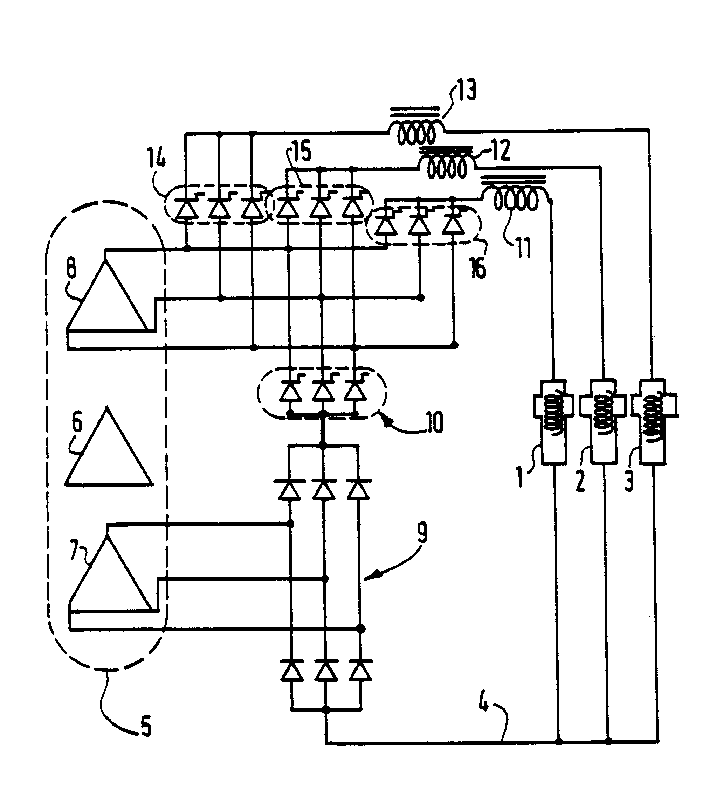

L'invention sera mieux comprise, et d'autres buts, avantages et caractéristiques de celle-ci apparaîtront plus clairement à la lecture de la description qui suit, à laquelle est annexé un dessin unique sur lequel :

- la Figure unique représente schématiquement un mode préféré de réalisation de l'invention.

En référence maintenant à cette Figure, un mode de réalisation de l'invention appliqué à l'alimentation de trois torches à plasmas individuelles 1, 2, 3 ayant une borne commune 4, a été représenté. Bien évidemment, on aurait pu tout aussi bien représenter un four à arc à courant continu à plusieurs électrodes. En outre, le nombre de charges électriques individuelles n'est pas limitatif.

La source d'alimentation électrique de puissance, non représentée, est ici constituée ar le réseau électrique triphasé auquel est connecté l'enroulement primaire 6 du transformateur 5 qui comporte deux enroulements secondaires 7 et 8. Le montage en triangle est donné ici à titre d'exemple.

L'enroulement secondaire 7 est relié à un premier ensemble redresseur 9 constitué ici par un pont de Graetz à diodes, donc non contrôlé, mais le pont pourrait tout aussi bien être à thyristors. Cet ensemble redresseur 9 a pour fonction de déterminer

2

entre ses bornes une tension redressée sensiblement constante d'une valeur déterminée, de préférence de l'ordre de 40 à 50 % de la tension totale à vide applicable à chaque torche. Toutefois, si la plage de la variation de la tension appliquée aux charges est inférieure à la tension maximale, cette tension redressée sensiblement constante peut être d'une valeur plus élevée et atteindre, par exemple, 80% de la tension totale à vide appliquée aux charges.

Dans l'exemple représenté, ce sont les anodes des diodes du demi-pont inférieur deu premier ensemble redresseur qui sont reliées à la borne de polarité commune 4 des torches, tandis que les cathodes des diodes du demi-pont supérieur sont reliées ensemble aux anodes des thyristors du demi-pont inférieur 10 du second ensemble redresseur .

Ce second ensemble redresseur est constitué par un demi-pont inférieur commun contrôlé 10 et par autant de demi-ponts supérieurs contrôlés individuellement qu'il y a de torches, c'est à dire, dans l'exemple représenté, trois. La borne inférieure de ce second ensemble redresseur est, comme on l'a dit précédemment, reliée à la borne supérieure du premier ensemble redresseur 9. Ce second ensemble redresseur est relié à l'enroulement secondaire 8 du transformateur 5.

Les cathodes des thyristors des demi-ponts supérieurs 14, 15, 16 du second ensemble redresseur sont respectivement reliées à la borne associée de polarité non commune des torches par l'intermédiaire d'une bobine de lissage ou de stabilisation 11, 12, 13. Ce second ensemble redresseur a pour fonction, individuellement pour chacune des charges, de soustraire ou d'ajouter une tension déterminée à la tension redressée engendrée entre les bornes du premier ensemble redresseur 9, de telle manière que la tension aux bornes de chaque charge individuellement puisse varier de façon continue entre 0 Volt et la tension nominale à vide, très rapidement dans la plage utile de tension.

On obtient ce résultat en faisant varier l'angle d'amorçage de chacun des thyristors du second ensemble redresseur. Si l'angle d'amorçage de chacun des thyristors des demi-ponts supérieurs 14, 15, 16 peut varier très rapidement, il est préférable de faire varier moins rapidement celui des thyristors du demi-pont inférieur 10, qui ajuste la plage de variation de la tension,pour ne pas affecter la régulation individuelle du courant dans chaque charge. Cette limitation de rapidité peut être supprimée, par exemple, en cas de surintensité anormale dans une charge. Dans ce cas, on prévoira une boucle de commande appropriée. A titre d'exemple, pour faire fonctionner un élément en survolteur, on amorce les thyristors en déphasage faible, tandis qu'on les amorce en déphasage élevé pour le faire fonctionner en dévolteur.

Ainsi pour faire monter la tension dans une charge de 0 Volt jusqu'à sa valeur maximale, il suffit de faire d'abord fonctionner la partie correspondante du second ensemble en dévolteur, puis de supprimer petit à petit l'effet soustractif en réduisant l'angle d'amorçage de ses thyristors pour le faire fonctionner en survolteur.

On comprendra donc aisément qu'il suffit de commander individuellement l'amorçage des thyristors des demi-ponts supérieurs de l'ensemble redresseur pour commander individuellement la tension appliquée aux bornes de chaque charge et qu'il est alors aisé de réaliser un circuit de régulation contrôlant individuellement le courant dans chacune de ces charges lorsque chaque charge fonctionne dans une même plage de tension.

L'Homme de l'Art comprendra facilement qu'un tel dispositif présente des avantages nombreux parmi lesquels on peut citer le fait que le transformateur est unique et ne nécessite pas autant d'enroulements secondaires qu'il y a de charges, que les redresseurs sont mis en commun et que, par suite, leur nombre est limité à celui nécessaire au passage du courant total des charges, qu'une partie importante de la puissance transmise peut être transférée par l'intermédiaire de diodes et non de thyristors, ce qui réduit sensiblement le coût, mais, en outre, il faut remarquer qu'un tel montage limite la consommation d'énergie réactive, et qu'il est facile de neutraliser les harmoniques de faible rang si le nombre de charges est suffisant.

Bien évidemment, toute modification apportée par l'Homme de l'Art ne sortirait pas du cadre de la présente invention telle que définie dans les revendications ci-jointes. Par exemple, on pourra mettre plusieurs diodes ou thyristors en parallèle sur chaque branche des demi-ponts en fonction du courant y circulant.

**Revendications**

1. Convertisseur pour l'alimentation en courant continu d'une pluralité de charges électriques commandées de façon distincte, à partir du réseau électrique triphasé auquel est connecté l'enroulement primaire d'un transformateur, comprenant des ensembles redresseurs reliés en série et avec des enroulements secondaires séparés dudit transformateur, caractérisé en ce que lesdites charges (1,2,3) ont une borne de polarité commune (4) et en ce que lesdits ensembles redresseurs sont constitués par un premier et un deuxième ensembles redresseurs, ledit premier ensemble redresseur (9), commun, de préférence non contrôlé, étant relié à ladite borne de polarité commune (4) et ledit second ensemble redresseur, contrôlé, étant constitué par un demi-pont inférieur (10), commun, relié audit premier ensemble redresseur (9) et par une pluralité de demi-ponts supérieurs (14,15,16), chacun d'eux étant relié en série à la borne de polarité non commune d'une charge électrique, ledit transformateur comportant deux enroulements secondaires (7,8) respectivement reliés, d'une part, au premier ensemble redresseur (9) et, d'autre part, au second ensemble redresseur et les éléments semi-conducteurs de chacun desdits ensembles redresseurs étant tous connectés dans le même sens.

2. Convertisseur selon la revendication 1, caractérisé en ce qu'une bobine de stabilisation (13,12,11) est connectée entre chacun des demi-ponts supérieurs (14,15,16) du second ensemble redresseur et la borne de polarité non commune de la charge électrique à laquelle il est connecté.

3. Convertisseur selon l'une des revendications 1 ou 2, caractérisé en ce que le premier ensemble redresseur (9) délivre en permanence une première tension redressée tandis que le second ensemble redresseur fonctionne en dévolteur ou en survolteur en fonction de la tension finale individuelle souhaitée entre les bornes de chaque charge.

4. Convertisseur selon la revendication 3, caractérisé en ce que la tension délivrée par ledit premier ensemble redresseur (9) est fonction de la plage de variation de la tension appliquée aux charges et, de préférence, de l'ordre de 40 à 50 % de la tension nominale totale à vide appliquée à chaque charge.

## Claims

1. Converter for supplying with direct current a plurality of electrical loads controlled in an individual manner, from the three-phase electrical network to which is connected the primary winding of a transformer, comprising rectifier sets connected in series and with separate secondary windings of the said transformer, characterised in that the said loads (1, 2, 3) have a terminal of common polarity (4) and in that the said rectifier sets are constituted by a first and a second rectifier sets,the said first rectifier set (9), which is common and preferably non-controlled, being connected to the said terminal of common polarity (4) and the said second rectifier set, which is controlled, being constituted by a lower half-bridge (10), which is common and connected to the said first rectifier set (9), and by a plurality of upper half-bridges (14, 15, 16), each of these being connected in series to the terminal of non-common polarity of an electrical load, the said transformer comprising two secondary windings (7, 8) connected respectively, on the one hand, to the first rectifier set (9) and, on the other hand, to the second rectifier set and all the semiconductor elements of each of the said rectifier sets being connected in the same direction.

2. Converter according to Claim 1, characterised in that a stabilisation coil (13, 12, 11) is connected between each of the upper half-bridges (14, 15, 16) of the second rectifier set and the terminal of non-common polarity of the electrical load to which it is connected.

3. Converter according to either of Claims 1 and 2, characterised in that the first rectifier set (9) delivers continuously a first rectified voltage whereas the second rectifier set functions as a negative booster or as a positive booster depending on the individual final voltage required between the terminals of each load.

4. Converter according to Claim 3, characterised in that the voltage delivered by the said first rectifier set (9) is a function of the range of variation of the voltage applied to the loads and, preferably, is of the order of 40 to 50% of the total nominal open-circuit voltage applied to each load.

## Patentansprüche

1. Wandlereinrichtung für die Versorgung einer Mehrzahl von getrennt gesteuerten elektrischen Lasten mit Gleichstrom aus einem elektrischen Dreiphasennetz, mit dem die Primärwicklung eines Transformators verbunden ist, mit Gleichrichtergruppen, die in Reihe geschaltet und mit getrennten Sekundärwicklungen des Transformators verbunden sind, dadurch gekennzeichnet, daß die Lasten (1, 2, 3) eine Klemme (4) gemeinsamer Polarität besitzen und daß die Gleichrichtergruppen von einer ersten und von einer zweiten Gleichrichtergruppe gebildet sind, wobei die erste, gemeinsame, vorzugsweise nicht gesteuerte Gleichrichtergruppe (9) mit der Klemme (4) gemeinsamer Polarität verbunden ist und wobei die zweite, gesteuerte Gleichrichtergruppe von einer unteren mit der ersten Gleichrichtergruppe (9) verbundenen gemeinsamen Halbbrücke (10), und von mehreren oberen Halbbrücken (14, 15, 16) gebildet ist, wobei jede von diesen mit der Klemme nicht gemeinsamer Polarität einer elektrischen Last in Reihe geschaltet ist, wobei der Transformator zwei Sekundärwicklungen (7, 8) aufweist, von denen die eine mit der ersten Gleichrichtergruppe (9) und die andere mit der zweiten Gleichrichtergruppe verbunden ist, und wobei die Halbleiterelemente einer jeden der Gleichrichtergruppen sämtlich in demselben Richtungssinn geschaltet sind.

2. Wandlereinrichtung gemäß Anspruch 1, dadurch gekennzeichnet, daß zwischen jede der oberen Halbbrücken (14, 15, 16) der zweiten Gleichrichtergruppe und der Klemme nicht gemeinsamer Polarität der elektrischen Last, mit der sie verbunden ist, eine Stabilisierungsspule (13, 12, 11) geschaltet ist.

3. Wandlereinrichtung gemäß einem der Ansprüche 1 oder 2, dadurch gekennzeichnet, daß die erste Gleichrichtergruppe (9) ständig eine gleichgerichtete erste Spannung abgibt, während die zweite Gleichrichtergruppe in Abhängigkeit von der zwischen den Klemmen einer jeden Last gewünschten individuellen Endspannung als Spannungserniedriger oder als Spannungserhöher arbeitet.

4. Wandlereinrichtung gemäß Anspruch 3, dadurch gekennzeichnet, daß die von der ersten Gleichrichtergruppe (9) abgegebene Spannung vom Änderungsbereich der an die Lasten angelegten Spannung abhängt und vorzugsweise in der Größenordnung von 40 bis 50% der an jede Last angelegten Leerlauf-Gesamtnennspannung liegt.